# EUROPÄISCHE PATENTANMELDUNG

(11) **EP 2 184 258 A2**
(43) Veröffentlichungstag der Anmeldung: **12.05.2010**
(21) Anmeldenummer: 09175126.3
(22) Anmeldetag: 05.11.2009
(51) Int. Cl.: B67C 3/22

(54) **Druckbehälter für Flüssigkeitsvorhaltung**

(30) Priorität: 05.11.2008 DE 202008014711 U
(71) Anmelder: Krones AG, 93073 Neutraubling (DE)
(72) Erfinder: Peter, Michael, 93354 Siegenburg (DE); Weber, Michael, 93177 Altenthann (DE)
(74) Vertreter: Schuster, Thomas

(57) **Zusammenfassung**

Es wird ein Druckbehälter (1) für Flüssigkeitsvorhaltung, insbesondere für eine Befüllvorrichtung mit einem Boden (4) beschrieben. Um diesen Druckbehälter (1) einfacher und kostengünstiger herstellen zu können, wird vorgeschlagen, dass der Boden (4) eine periphere Fundamentfläche (6a) und einen ins Innere des Druckbehälters hinein hohl gewölbten Teil (5) aufweist, der sich auf der Fundamentfläche (6a) krafteinleitend abstützt.

## Beschreibung

Die Erfindung bezieht sich auf einen Druckbehälter für Flüssigkeitsvorhaltung der im Oberbegriff von Anspruch 1 erläuterten Art.

Ein derartiger Druckbehälter ist aus der EP 1 731 478 bekannt. Der bekannte Druckbehälter wird bei einem Füllerkarussell eingesetzt und weist eine Vielzahl peripher am Boden vorgesehener Auslassöffnungen auf. Da der Boden einem relativ hohen Druck standhalten muss, besteht der Boden aus einer im Wesentlichen horizontal verlaufenden und durchgängig massiven Bodenplatte mit einer hohen Mindestmaterialstärke, die dem Druck standhalten muss. Die Bodenplatte ist weiterhin mit einer nach innen vorstehenden Ablaufschräge versehen, die ein vollständiges Entleeren des Druckbehälters sicherstellt. Die Ablaufschräge wird durch eine sich von der Auslassöffnung zur Mittellinie vergrößernde Dicke der Bodenplatte erreicht, so dass hier noch weiteres Material eingesetzt werden muss. Ein derartiger massiver Boden, der in der Lage ist, der Druckbeaufschlagung allein durch seine Materialfestigkeit standzuhalten, ist jedoch nur bis zu einer bestimmten Baugröße rentabel. Je größer der Behälter wird, umso dicker muss dann die Bodenplatte werden, wodurch sich die Herstellungskosten extrem erhöhen.

Der Erfindung liegt die Aufgabe zugrunde, einen Druckbehälter bereitzustellen, der ohne Festigkeitsverlust einfach und kostengünstig herstellbar ist.

Die Aufgabe wird durch die im Anspruch 1 abgegebenen Merkmale gelöst.

Durch die erfindungsgemäße Ausgestaltung des Bodens mit einem hohl nach innen gewölbten Teil, der sich auf einer Fundamentfläche krafteinleitend abstützt, kann die Wandstärke des Bodens ohne Verlust von Druckaufnahmefähigkeit reduziert werden. Für eine Abstützung ist lediglich eine geringe radiale Breite der Fundamentfläche erforderlich, die zum Aufsetzen der Wandstärke des gewölbten Teils ausreicht und eine Entnahme der Flüssigkeit an der tiefsten Stelle erlaubt, so dass sich der Materialverbrauch für das Auflager in engen Grenzen hält. Der Druckbehälter wird leichter und durch die Wölbung im Boden verringert sich gegen Ende das Volumen im Behälter, wodurch sich bei gleicher Füllhöhe weniger Flüssigkeit im Behälter befindet, sodass die Restentleerung beschleunigt wird. Ein weiterer Vorteil dieser Bauweise ist, dass der durch die Wölbung im Boden entstandene Freiraum außerhalb des Behälters für Anschlussbaugruppen genutzt werden kann.

Die Fundamentfläche ist bevorzugt ringförmig ausgebildet, sodass sie ein durchgehendes Auflager für den gewölbten Teil bildet.

Die periphere Fundamentfläche kann auf einer wie üblich massiven, starkwandigen Bodenplatte vorgesehen werden, die jedoch in Radialrichtung sehr schmal gehalten werden kann und mit der wenigstens einen Auslassöffnung und ggf. mit den damit verbundenen Armaturen oder dgl. versehen wird, ohne dass der Kraftverlauf im gewölbten Teil gestört wird. Bevorzugt ist die Fundamentfläche auf einer als Ring konstanter Stärke ausgebildeten Bodenplatte vorgesehen. Der ebene (horizontal verlaufende) Ring kann auch für zusätzliche Einbauten und die Aufnahme des Behälters genutzt werden. Auch kann der Ring die Verteilung der Flüssigkeit auf eine Vielzahl in Umfangsrichtung verteilt angeordneter Auslauföffnungen erleichtern.

Zwar könnte der gewölbte Teil auch als Halbkugel ausgebildet sein, was im Hinblick auf die Krafteinleitung optimal wäre, bevorzugt werden jedoch die üblichen, meist genormten, speziell für Druckbehälter konzipierten, gewölbten Böden eingesetzt und mit der Wölbung in das Innere des Druckbehälters weisend angeordnet. Derartige gewölbte Böden enthalten eine mittlere, kugelförmige Kalotte mit einem ersten Radius und eine periphere Krempe mit einem zweiten, kleineren Radius, an die sich nach außen meist ein im Wesentlichen zylindrischer Bord anschließt. Die Radienverhältnisse sind je nach Land und Norm unterschiedlich. Bevorzugt wird jedoch ein sogenannter Klöpperboden eingesetzt, da dieser bei guten Kraftaufnahmeverhältnissen etwas flacher gewölbt ist als andere gewölbte Böden und demzufolge am wenigsten Innenraum und somit Füllvolumen einnimmt.

Ein Ausführungsbeispiel der Erfindung wird nachfolgend anhand der einzigen Zeichnung näher erläutert:

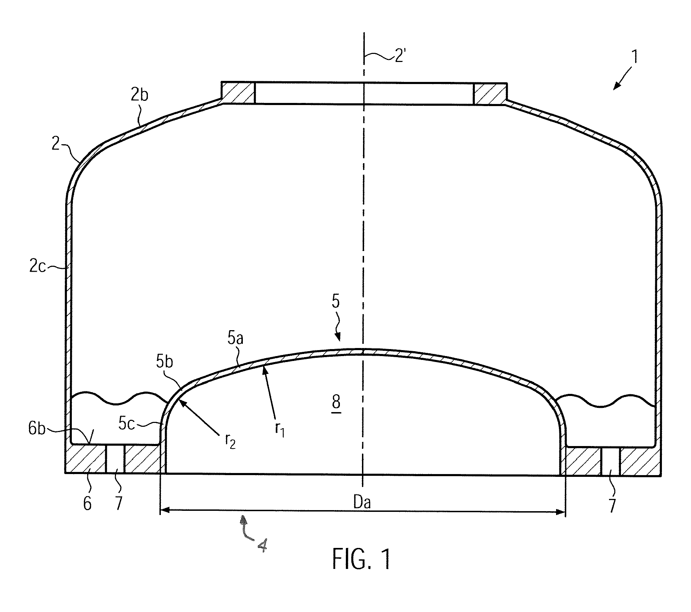

- Fig. 1: zeigt in schematischer, geschnittener Darstellung einen erfindungsgemäßen Druckbehälter.

Der Druckbehälter 1 ist generell für jede Art von Flüssigkeitsvorhaltung geeignet, wird jedoch bevorzugt bei Befüllmaschinen von Gefäßen mit Flüssigkeiten und insbesondere bei einem sogenannter Füllerkarussell eingesetzt, mit dem Getränke unter Druck abgefüllt werden können.

Der Druckbehälter 1 enthält einen Behälterkörper 2 üblicher Bauart, wobei im dargestellten Ausführungsbeispiel ein zylindrischer Teil 2a vorgesehen ist, der mit senkrechter Mittellinie 2' angeordnet und nach oben mit einem wie üblich nach außen gewölbten Deckteil 2b abgedeckt ist. Im Behälterkörper 2 sind an geeigneter Stelle ein oder mehrere Einlässe 3 vorgesehen, wobei im dargestellte Ausführungsbeispiel ein Einlass symmetrisch zur Mittellinie 2' an der höchsten Stelle des Druckbehälters 2, das heißt durch den gewölbten Deckteil 2b hindurch, vorgesehen ist.

Der Druckbehälter 2 ist mit einem Boden 4 nach unten verschlossen. Der Boden 4 enthält einen gewölbten Teil 5, der sich auf einer Fundamentfläche 6a auf einem Auflager abstützt. Das Auflager ist im dargestellten Ausführungsbeispiel als ringförmige, ungewölbte, sich im Wesentlichen horizontal und quer zur Mittellinie 2' erstreckenden Bodenplatte 6 ausgebildet, auf deren innerem Bereich die Fundamentfläche 6a vorgesehen ist. Die ringförmige Bodenplatte 6 erstreckt sich im unteren Bereich des oder im Anschluss an den zylindrischen Teil 2a des Behälterkörpers 2 peripher um die Mittelachse 2' herum. In der Bodenplatte 6 ist zwischen der Fundamentfläche 6a und dem zylindrischen teil 2a wenigstens eine Auslassöffnung 7 vorgesehen. Die Auslassöffnung 7 ist im dargestellten Ausführungsbeispiel als einfache Durchbrechung der Bodenplatte 6 gezeigt, ihre Anzahl und Ausgestaltung können jedoch je nach Verwendungszweck variiert werden. Ist die radiale Erstreckung der Bodenplatte 6 bezüglich der Mittellinie 2' größer als die Weite der Auslassöffnung 7, so ist ihre sich an die Fundamentfläche 6a anschließende Oberseite 6b bevorzugt unter einem geringfügigen Fließwinkel in Richtung auf die Auslassöffnung 7 geneigt, um ein vollständiges Entleeren des Druckbehälters 1 sicherzustellen. Ansonsten ist die Bodenplatte 6 über die volle Wandstärke massiv (mit Material gefüllt), das heißt starkwandig, ausgebildet, wobei die Dicke der Bodenplatte 6 auf die Druckverhältnisse im Druckbehälter 1 abgestimmt ist. Durch den teilweisen Ersatz der durchgehend massiven Bodenplatte des Standes der Technik durch den nach innen gewölbten Teil 5 wird ein Großteil der Kraft seitlich in die ringförmige Bodenplatte 6 eingeleitet. Die Angriffsfläche auf der massiven Bodenplatte wird geringer und diese kann somit dünner ausgeführt werden, als dies bei einer herkömmlichen durchgehend massiven Bodenplatte ohne gewölbten Teil notwendig wäre.

Durch die Anordnung des hohl gewölbten Teils 5 mit der Wölbung nach innen, das heißt in den mit Flüssigkeit gefüllten Innenraum des Druckbehälters 1 hinein, verbleibt unterhalb des gewölbten Teils 5 ein Hohlraum 8, der in vorteilhafter Weise zur Aufnahme anderer Bestandteile der Anlage ausgenutzt werden kann.

Der gewölbte Teil 5 kann je nach Anforderung ausgebildet sein, ist jedoch bevorzugt in der Art der üblichen gewölbten Böden für Druckbehälter geformt. Der gewölbte Teil 5 besteht aus einem Metallblech, dessen Stärke, wie dies bei Böden für Druckbehälter üblich ist, auf den Innendruck im Druckbehälter 1 und den aus der Form resultierenden Kraftfluss abgestimmt ist. Die Wandstärke des gewölbten Teils 5 ist jedoch auf jeden Fall wesentlich geringer als die der Bodenplatte 6.

Der gewölbte Teil 5 kann beispielsweise halbkugelförmig sein oder jede andere Wölbung aufweisen. Bevorzugt wird der gewölbte Teil 5 jedoch in der Art der bei Druckbehältern üblichen gewölbten Böden ausgebildet, aber mit der Wölbung nach innen weisend angeordnet. Diese üblichen gewölbten Böden enthalten einen ersten Bereich 5a, der mit einem ersten Radius r₁ gewölbt ist und sich über den größten Teil der radialen Abmessung (Außendurchmesser Dₐ) erstreckt. Der erste Bereich 5a ist als Kugelkalotte ausgebildet und erstreckt sich symmetrisch um die Mittellinie 2' des Behälterkörpers 2.

Am radial äußeren Rand des kugelkalottenförmigen ersten Bereichs 5a schließt sich ein zweiter Bereich 5b an, der mit einem zweiten, kleineren Radius r₂ gewölbt ist. Dieser zweite Bereich 5b, die sogenannte Krempe, erstreckt sich über etwa einen Viertelkreis oder weniger und führt meist in einen im Wesentlichen zylindrischen dritten Bereich 5c, den sogenannten Bord. Der dritte Bereich 5c steht auf der Fundamentfläche 6a krafteinleitend auf. Bei dieser Art von Böden wird die senkrecht auf seine Oberfläche einwirkende Flächenpressung als gebündelter Kraftfluss in die Fundamentfläche 6a eingeleitet. Auch bestimmt der Außendurchmesser des dritten Bereichs 5c den Außendurchmesser Dₐ des gewölbten Teils.

Die Durchmesserverhältnisse von r₁ zu r₂ sowie die anderen Abmessungen der üblichen gewölbten Böden können variiert werden. Besonders bevorzugt für den vorliegenden Verwendungszweck, da bei guter Krafteinleitung relativ flach gewölbt ausgebildet, sodass wenig Füllvolumen verloren geht, ist der sogenannte Klöpperboden gemäß DIN28011, bei dem der erste Radius r₁ gleich dem Außendurchmesser Dₐ ist und der zweite Radius r₂ = 0,1 x Dₐ ist. Beim Klöpperboden nach ASME F & D ist r₁ = Dₐ und r₂ = 0,06 Dₐ.

Weitere verwendbare genormte Böden sind beispielsweise der Korbbogenboden nach DIN28013, bei dem r₁ = 0,8 Dₐ und r₂ = 0,154 Dₐ ist.

Weiterhin sind auch beispielsweise elliptisch geformte, gewölbte Böden, die im amerikanischen Raum verwendet werden, geeignet, bei denen das Verhältnis der Radien r₁: r₂ 2:1 entspricht.

Die Fertigung dieser Böden ist wesentlich einfacher als beispielsweise der einer Halbkugel, wobei sowohl Kaltpressverfahren als auch Warmpressverfahren oder die Zusammensetzung aus einzelnen Segmenten einsetzbar ist.

In Abwandlung des beschriebenen und gezeichneten Ausführungsbeispiels können beispielsweise der oder die Einlässe an jeder anderen Stelle des Druckbehälters 1 vorgesehen werden. Die massive Bodenplatte 6 kann bis auf eine radiale Erstreckung verschmälert werden, die lediglich für die Anordnung der Auslassöffnung 7 ausreicht oder, wenn die Auslassöffnung 7 seitlich durch die zylindrische Wandlung 2a gelegt werden kann, kann die Bodenplatte 6 auf einen Befestigungssteg reduziert werden, der so weit von der Auslassöffnung entfernt ist, dass ein ausreichender Durchfluss gewährleistet wird. Der Einlass kann von oben oder von unten erfolgen. Die Bodenplatte muss nicht unbedingt mit voller Wandstärke massiv ausgebildet sein sondern kann als kraftaufnehmendes Tragwerk mit Verstrebungen, Versteifungen usw. ausgebildet sein.

## Patentansprüche

1. Druckbehälter (1) für Flüssigkeitsvorhaltung, insbesondere für eine Befüllvorrichtung, mit einem druckaufnehmenden Boden (4), **dadurch gekennzeichnet, dass** der Boden (4) eine periphere Fundamentfläche (6a) und einen ins Innere des Druckbehälters (1) hinein hohl gewölbten Teil (5) aufweist, der sich auf der Fundamentfläche (6a) krafteinleitend abstützt.

2. Druckbehälter nach Anspruch 1, **dadurch gekennzeichnet, dass** die Fundamentfläche (5a) ringförmig ausgebildet ist.

3. Druckbehälter nach Anspruch 1 oder 2, **dadurch gekennzeichnet, dass** die Fundamentfläche (6a) auf einer als Ring ausgebildeten, im Wesentlichen horizontal verlaufenden Bodenplatte (6) vorgesehen ist.

4. Druckbehälter nach Anspruch 3, **dadurch gekennzeichnet, dass** die Bodenplatte (6) mit einer Auslassöffnung (7) versehen ist.

5. Druckbehälter nach einem Ansprüche 1 bis 4, **dadurch gekennzeichnet, dass** der gewölbte Teil (5) eine mittlere, kugelförmige Kalotte (5a) mit einem ersten Radius (r₁) und eine periphere Krempe (5b) mit einem zweiten, kleineren Radius (r₂) aufweist.

6. Druckbehälter nach einem der Ansprüche 1 bis 5, **dadurch gekennzeichnet, dass** der gewölbte Teil (5) als Klöpperboden nach DIN28011 mit einem ersten Radius r₁ = Dₐ und einem zweiten Radius r₂ = 0,1 Da ausgebildet ist, wobei Dₐ der Außendurchmesser eines zylindrischen Bords (5c) ist.

7. Druckbehälter nach einem der Ansprüche 1 bis 5, **dadurch gekennzeichnet, dass** der gewölbte Teil (5) als Klöpperboden nach ASME F & D mit einem ersten Radius r₁ = Dₐ und einem zweiten Radius r₂ = 0,06Dₐ ausgebildet ist, wobei Dₐ der Außendurchmesser eines zylindrischen Bords (5c) ist.

8. Druckbehälter nach einem Ansprüche 1 bis 5, **dadurch gekennzeichnet, dass** der gewölbte Teil (5) als Korbbogenboden nach DIN28013 mit einem ersten Radius r₁ = 0,8 Dₐ und einem zweiten Radius r₂ = 0,154Dₐ ausgebildet ist, wobei Dₐ der Außendurchmesser eines zylindrischen Bords (5c) ist.

9. Druckbehälter nach einem der Ansprüche 1 bis 5, **dadurch gekennzeichnet, dass** der gewölbte Teil (7) als elliptisch gewölbter Boden ausgebildet ist, bei dem der erste Radius r₁ doppelt so groß ist wie der zweite Radius r₂.
